# EUROPÄISCHE PATENTSCHRIFT

(11) **EP 0 457 954 B1**
(45) Veröffentlichungstag und Bekanntmachung des Hinweises auf die Patenterteilung: **25.05.1994**
(21) Anmeldenummer: 90113817.2
(22) Anmeldetag: 19.07.1990
(51) Int. Cl.: F23D 14/14, F23D 14/66, F23D 14/64, F24C 3/04

(54) **Strahlungsbrenner**
Radiant burner
Brûleur radiant

(30) Priorität: 25.05.1990 DE 4016803
(43) Veröffentlichungstag der Anmeldung: 27.11.1991
(73) Patentinhaber: Schwank GmbH, D-50735 Köln (DE)
(72) Erfinder: Schwank, Bernd H., D-5000 Köln 51 (DE)
(74) Vertreter: Köhne, Friedrich, Dipl.-Ing.

(56) Entgegenhaltungen:
- DE-A- 2 015 908
- DE-A- 3 012 588
- FR-A- 2 380 495
- US-A- 3 225 815
- US-A- 4 727 854

## Beschreibung

Die Erfindung bezieht sich auf einen Strahlungsbrenner, insbesondere für gasförmigen Brennstoff, mit einem im Querschnitt etwa trapezförmigen einseitig offenen doppelwandigen Gehäuse mit Reflektorinnenwänden, in dem sich eine Gemischkammer zur Aufbereitung des Brennstoff-Luft-Gemisches befindet, wobei an die Gemischkammer eine zahlreiche Verbrennungskanäle aufweisende Brenner-Keramikplatte angeschlossen ist, wobei ferner auf der Abstrahlungsseite der Brenner-Keramikplatte ein Strahlungsgitter vorgesetzt ist, und wobei eine Vorrichtung zum Zuführen von Brennstoff und Luft zu der Gemischkammer vorgesehen ist, welche eine an eine Brennstoffleitung angeschlossene Injektordüse sowie ein Mischrohr aufweist.

Ein solcher Strahlungsbrenner ist aus der DE-PS 30 12 588 bekannt. Dieser Strahlungsbrenner ist hauptsächlich für den Einsatz in solchen Bereichen bestimmt, in denen der Strahlungsbrenner mehr oder weniger starkem Wind oder Sturm ausgesetzt ist, z. B. in zugigen großen Werkshallen zur Strahlungsbeheizung von Arbeitsplätzen oder zur Beheizung von Zuschauerplätzen auf Sportstadien u. dgl. Hier hat sich der Strahlungsbrenner überaus gut bewährt. Durch die zahlreichen Schutzmaßnahmen, insbesondere für den Winschutz, sowohl auf der Zuführungsseite der Verbrennungsluft als auch auf der Abstrahlungsseite der Brennerplatte und bei der Ableitung der Verbrennungsgase, ist ein verhältnismäßig großer Bauaufwand erforderlich. Außerdem wird ein verhältnismäßig großer Betriebsdruck des Brennstoff-Luft-Gemisches erforderlich. Der Grund hierfür ist nach den Erkenntnissen der Erfindung vor allem darin zu sehen, daß bei Anordnung des Strahlungsbrenners mit Strahlungsrichtung vertikal nach unten hin die gesamte Vorrichtung zum Zuführen von Brennstoff und Luft zu der Gemischkammer einschließlich einer Injektordüse und eines Mischrohres oberhalb der Brennerplatte vorgesehen ist. Dadurch ergibt sich einschließlich der Gemischkammer ein verhältnismäßig großer Raum innerhalb des Brennergehäuses oberhalb der Brennerplatte, wodurch einmal Schwierigkeiten bei der gleichmäßigen Verteilung des Brennstoff-Luft-Gemisches auf der Einlaßseite der Brennerplatte entstehen und zum anderen, soweit dies überhaupt angestrebt wird, läßt sich das Brennstoff-Luft-Gemisch nicht genügend intensiv und gleichmäßig vorwärmen.

Das Bauprinzip, die Vorrichtung zum Zuführen von Brennstoff und Luft oberhalb der Brennerplatte anzuordnen, findet sich immer wieder in dem gesamten einschlägigen Stand der Technik. Als Beispiele seien die folgenden Druckschriften genannt:
US-PS 3 434 466, DE-AS 1 164 059, CH-PS 359 861,
FR-OS 2 624 253 und DE-OS 28 29 075.

Da vielerorts, vor allem auch in anderen Ländern, nur niedrige Gasdrücke in den Gasleitungen zur Verfügung stehen, liegt der Erfindung die Aufgabe zu Grunde, einen Strahlungsbrenner zu schaffen, der bei geringem Herstellungs- bzw. Bauaufwand und mit möglichst kleiner Gemischkammer einen zuverlässigen und wirkungsvollen Betrieb auch dann gestattet, wenn nur niedrige Gasdrücke vorhanden sind.

Die gestellte Aufgabe wird erfindungsgemäß dadurch gelöst, daß die Injektordüse und das Mischrohr nach dem Rand der offenen Gehäuseseite zu angeordnet sind, und daß zwischen dem Mischrohr und der Gemischkammer eine Zwischenkammer vorgesehen ist, derart, daß die heißen Abgase die Wandung der Zwischenkammer bestreichen und das in der Zwischenkammer befindliche frische Brennstoff-Luft-Gemisch vorgewärmt wird.

Vorteilhafte Ausgestaltungen der Erfindung ergeben sich aus den Unteransprüchen.

In der Zeichnung sind Ausführungsbeispiele des erfindungsgemäßen Strahlungsbrenners im Schema dargestellt, und zwar zeigen
Figur 1 einen vertikalen Querschnitt durch einen Strahlungsbrenner gemäß Schnittlinie I-I in Figur 4,
Figur 2 eine Einzelheit aus Figur 1 gemäß dem strichpunktierten Kreis II in vergrößertem Maßstab,
Figur 3 eine Draufsicht auf einen Kreisausschnitt aus dem Strahlungsgitter,
Figur 4 einen vereinfacht gezeichneten vertikalen Längsschnitt zu Figur 1 in verkleinertem Maßstab,
Figur 5 einen vertikalen Querschnitt durch eine andere Ausführung eines Strahlungsbrenners gemäß Schnittlinie V-V in Figur 8,
Figur 6 eine Einzelheit aus Figur 5 gemäß dem strichpunktierten Kreis VI in Figur 5,
Figur 7 einen vertikalen Querschnitt gemäß Schnittlinie VII-VII in Figur 8,
Figur 8 einen vereinfacht gezeichneten vertikalen Längsschnitt zu dem Strahlungsbrenner gemäß den Figuren 5 und 7,
Figur 9 einen vertikalen Querschnitt durch ein anderes Ausführungsbeispiel eines Strahlungsbrenners,
Figur 10 einen vertikalen Querschnitt durch einen Strahlungsbrenner mit zwei Brenner-Keramikplatten-Einheiten und einer Zwischenhalterung,
Figur 11 einen vertikalen Querschnitt durch einen Strahlungsbrenner mit zwei Brenner-Keramikplatten-Einheiten, Zwischenhalterungen und zwei symmetrisch zueinander angeordneten Vorrichtungen zum Zuführen von Brennstoff und Luft,
Figur 12 eine Einzelheit entsprechend Figur 2, jedoch in einer anderen Konstruktion,
Figur 13 eine Ansicht in Richtung des Pfeiles XIII in Figur 12,
Figur 14 eine Ansicht, teils im Schnitt, auf die Unterseite gemäß Linie XIV-XIV in Figur 12,
Figur 15 eine Ansicht auf die Unterseite gemäß Pfeil XV in Figur 12, jedoch um 90° gedreht,
Figur 16 eine Einzelheit entsprechend Figur 2, jedoch in einer anderen konstruktiven Ausgestaltung,
Figur 17 eine Ansicht in Richtung des Pfeiles XVII in Figur 16,
Figur 18 eine Ansicht, teils im Schnitt, auf die Unterseite gemäß Linie XVIII-XVIII in Figur 16,
Figur 19 eine Ansicht auf die Unterseite gemäß Pfeil XIX, jedoch um 90° gedreht,
Figur 20 eine Einzelheit entsprechend Figur 2, jedoch in einer anderen konstruktiven Ausführung,
Figur 21 eine Ansicht, teils im Schnitt, auf die Unterseite gemäß Linie XXI-XXI in Figur 20 und
Figur 22 eine Ansicht in Richtung des Pfeiles XXII in Figur 21.

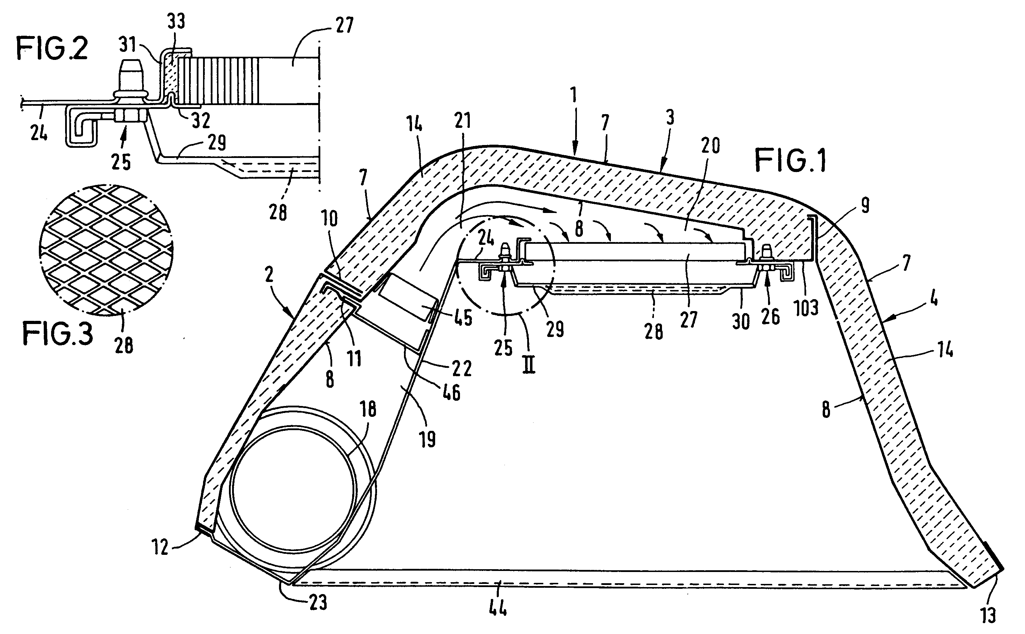

Die in der Zeichnung als Ausführungsbeispiele der Erfindung dargestellten Strahlungsbrenner sind als Infrarotstrahler ausgebildet, die mit einem gasförmigen Brennstoff-Luftgemisch betrieben werden. Der Strahlungsbrenner gemäß Figur 1 weist ein einseitig offenes Gehäuse 1 auf, und zwar ist die senkrecht zur Bildebene der Figur 1 untere Seite offen, so daß in der dargestellten Betriebsstellung die Abstrahlungsrichtung vertikal nach unten hin gegeben ist. Es kann aber auch jede andere beliebige Betriebsstellung gewählt werden, wenn eine schräge Abstrahlungsrichtung gewünscht wird. Vorzugsweise wird dann das Gehäuse 1 des Strahlungsbrenners im Uhrzeigersinn entsprechend der Schrägstellung geschwenkt. Dies gilt auch für die weiteren nachfolgend erläuterten Ausführungsbeispiele. Das Gehäuse besitzt zwei seitliche Gehäusewandungsteile 2 und 4, die am oberen Ende mit einem weiteren Gehäusewandungsteil, nämlich einer Gehäusedeckwand 3 verbunden sind. Die beiden seitlichen Gehäusewandungsteile 2 und 4 sind nach unten hin gespreizt, so daß sich ein etwa trapezförmiger Querschnitt ergibt. Wegen der nachfolgend noch näher erläuterten trapezförmigen Verjüngung des Querschnittes der Gemischkammer 20 verläuft die Gehäusedeckwand 3 von der rechten Seite zur linken Seite der Figur 1 hin unter einem spitzen Winkel leicht ansteigend, so daß der trapezförmige Querschnitt unsymmetrisch ist. Alle Gehäusewandungsteile 2, 3, 4 einschließlich der Stirnwände 5 und 6 (Figur 2) sind doppelwandig ausgeführt. Die Außenwandung 7 und die Innenwandung 8 und auch die Stirnwände 5 und 6 bestehen aus einfach geformten Blechteilen. An benachbarten Längsrändern sind Umkantungen 9, 10 und 11 vorgesehen, an denen die Blechteile miteinander verbunden werden können und die gleichzeitig als Verstärkungen bzw. Abstandshalter dienen. Am Rand der offenen Gehäuseseite sind noch Randabschlußbleche 12 und 13 befestigt. Bei dem Ausführungsbeispiel nach den Figuren 1 und 2 ist der Zwischenraum zwischen den beiden mit Abstand voneinander verlaufenden Wänden 7 und 8 mit einem Wärmeisolationsmaterial 14, vorzugsweise aus Mineralwolle, ausgefüllt.

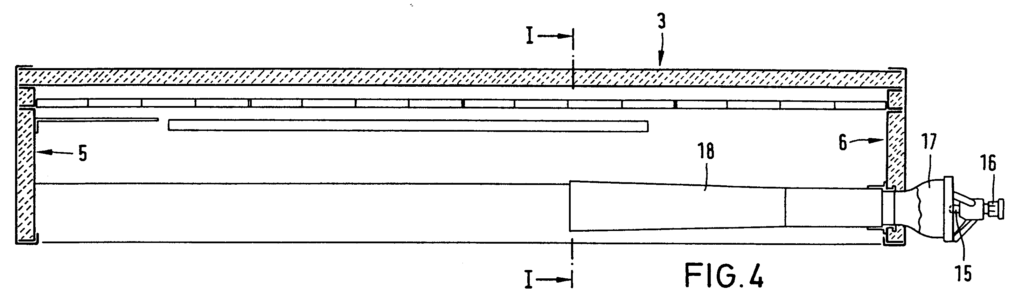

Im oberen Teil des Gehäuses 1, einerseits begrenzt durch die Innenwandung 8 des Gehäusewandungsteils 3 bzw. der Gehäusedeckwand, befindet sich die Gemischkammer 20, die möglichst klein bemessen ist, um eine weitgehend gleichmäßige Verteilung des frischen Brennstoff-Luft-Gemisches über die Oberfläche der Brenner-Keramikplatte 27 zu erzielen. Vorteilhafterweise ist die Gemischkammer 20 zu diesem Zweck ausgehend von der Anschlußstelle 21 mit der nachfolgend erläuterten Zwischenkammer 19 über ihre Breite im Querschnitt etwa trapezförmig verjüngt, wie Figur 1 veranschaulicht. Die Brenner-Keramik-Platte 27 weist zahlreiche Verbrennungskanäle auf, die vertikal nach unten durch die Brenner-Keramikplatte hindurchlaufen, wie Figur 2 zeigt. Unter dem Begriff Brenner-Keramikplatte ist nicht nur ein einzelnes Plattenstück zu verstehen. Nur bei sehr kurzen Strahlungsbrennern genügt unter Umständen eine einzige rechteckige Brenner-Keramikplatte. Um eine größere Heizleistung zu erzielen, weist das Gehäuse 1 des Strahlungsbrenners vorteilhafterweise eine im Verhältnis zu den Querschnittsabmessungen langgestreckte Form auf (Figur 4). Die Brenner-Keramikplatte 27 besteht dann aus einer ganzen Reihe von Platten, die in einer Ebene senkrecht zur Bildebene der Figur 1 dicht hintereinander liegend angeordnet sind. Auf der Abstrahlungsseite der Brenner-Keramikplatte 27 ist mit Abstand von dieser ein Strahlungsgitter 28 vorgesetzt, das vorzugsweise aus Streckmetall besteht. Die Ränder 29 und 30 des Strahlungsgitters 28 sind nach oben hin umgekantet und durch Nietverbindungen 25 und 26 befestigt. Mit den gleichen Nietverbindungen 25 und 26 sind auch die Ränder der Brenner-Keramikplatte 27 gehalten. Zu dieser gemeinsamen Befestigung ist zur Konstruktionsvereinfachung der innere Rand 24 der Innenwandung 22 der Zwischenkammer 19 im Bereich der Anschlußstelle 21 mit der Gemischkammer 20 nach innen umgekantet. Die gemeinsamen Nietverbindungen 25 auf der einen Seite halten also den Rand 29 des Strahlungsgitters 28, den waagerecht verlaufenden Rand 24 und die Blecheinfassungen 31 und 32 zusammen. Auf der anderen Seite erfolgt die gleiche Befestigung durch gemeinsame Nietverbindungen 26 mit einem entsprechenden waagerecht gekanteten Teil 103 der Gehäuseinnenwandung 8. Zwischen den Blecheinfassungen 31, 32 einerseits und dem Rand der Brenner-Keramikplatte 27 andererseits ist eine L-förmige feuerfeste Dichtung 33 eingesetzt. Der Strahlungsbrenner ist ferner mit einer Vorrichtung zum Zuführen von Brennstoff und Luft zu der Gemischkammer 20 ausgestattet. Die Vorrichtung weist eine Injektordüse 15 mit einem Anschluß 16 an eine Brennstoffleitung auf. Der Brennstoff gelangt von der Injektordüse über ein Anschlußstück 17 in ein Mischrohr 18. Durch Injektionswirkung wird durch das stirnseitig offene Anschlußstück eine angepaßte Menge Verbrennungsluft von außen angesaugt, die sich dann in dem Mischrohr mit dem gasförmigen Brennstoff vermischt. Von Bedeutung ist nun, daß die Injektordüse 15 und das Mischrohr 18 nach dem Rand 12 der offenen Gehäuseseite zu angeordnet sind, wie die Figuren 1 und 4 veranschaulichen. Wenn das Gehäuse 1 eine langgestreckte Form aufweist, ist es vorteilhaft, das Mischrohr 18 nach dem Längsrand 12 der offenen Gehäuseseite, und zwar parallel zu diesem Längsrand anzuordnen. Zwischen dem Mischrohr 18 und der Gemischkammer 20 ist eine Zwischenkammer 19 vorgesehen, die das Mischrohr umgibt und allseitig geschlossen ist bis auf die Anschlußstelle 21 bzw. eine freie Verbindung am oberen Ende zu der Gemischkammer. In der Zwischenkammer erfolgt eine weitere Aufbereitung und Vermischung von Brennstoff und Luft. Am unteren Ende ist die Zwischenkammer 19 durch ein Randabschlußblech 23 geschlossen. Vorteilhafterweise ragt das Mischrohr 18 über einen Teil der Länge der Zwischenkammer 19 in diese hinein. Die Zwischenkammer 19 erstreckt sich über die Länge des Gehäuses und ist bis zum längsseitigen Anschluß 21 an die Gemischkammer 20 im Querschnitt trapezförmig verjüngt, wie Figur 1 zeigt.Das Brennstoff-Luftgemisch, das durch die Brenner-Keramikplatte hindurchströmt, verbrennt auf der Unterseite der Brenner-Keramikplatte 27 flammenlos, erhitzt damit vor allem die Unterseite der Brenner-Keramikplatte, die ihrerseits hauptsächlich Infrarot-Strahlung aussendet. Eine weitere Strahlung wird durch Erhitzen des Strahlungsgitters 28 erzeugt. Die Strahlungswirkung wird dadurch verbessert, daß das Gehäuse im Querschnitt trapezförmig gestaltet ist, so daß vor allem die Innenwände 8 und 22 eine Reflektorwirkung erzeugen. Die heißen Abgase können nur auf der offenen Unterseite des Gehäuses austreten. Auf dieser Unterseite ist zwar zweckmäßigerweise in Schutzgitter 44 befestigt, das aber so gestaltet ist, daß es den heißen Abgasen keinen nennenswerten Widerstand entgegensetzt. Die heißen Abgase, die das Bestreben haben, um die unteren Gehäusekanten herumzuströmen, um anschließend außerhalb des Gehäuses aufzusteigen, bestreichen auf diesem Weg vor allem die Innenwandung 22 der Zwischenkammer, so daß durch Wärmetausch das in der Zwischenkammer 19 befindliche frische Brennstoff-Luft-Gemisch vorgewärmt wird. Diese Wirkung kann auch dadurch verstärkt werden, daß das Gehäuse des Strahlungsbrenners gegenüber der Darstellung in Figur 1 im Uhrzeigersinn um einen gewissen Winkel unter 90° geschwenkt wird, beispielsweise um 30° oder 45°. Die heißen Abgase steigen dann bereits inerhalb des Gehäuses einseitig auf und bestreichen dann besonders intensiv die besagte Innenwandung 22 der Zwischenkammer 19. In jedem Fall kann eine Vorwärmung des frischen Brennstoff-Luft-Gemisches innerhalb der Zwischenkammer auf etwa 300° C erreicht werden. Durch diese Vorwärmung in der Zwischenkammer werden mehrere Vorteile erzielt. Einmal erhält das frische Brennstoff-Luft-Gemisch einen Auftrieb, so daß hierdurch die Luftansaugung am Eingang des Mischrohres 18 erheblich begünstigt wird. Dies ist gleichzeitig eine wesentliche Voraussetzung zum Betrieb des Strahlungsbrenners auch mit niedrigen Gasdrücken.

Bei den nachfolgend beschriebenen Ausführungsbeispielen sind für gleiche oder gleichartig wirkende Bauteile die gleichen Bezugszeichen wie in den Figuren 1 bis 4 verwendet worden, so daß die diesbezüglichen Erläuterungen auch für diese nachfolgenden Ausführungsbeispiele gelten.

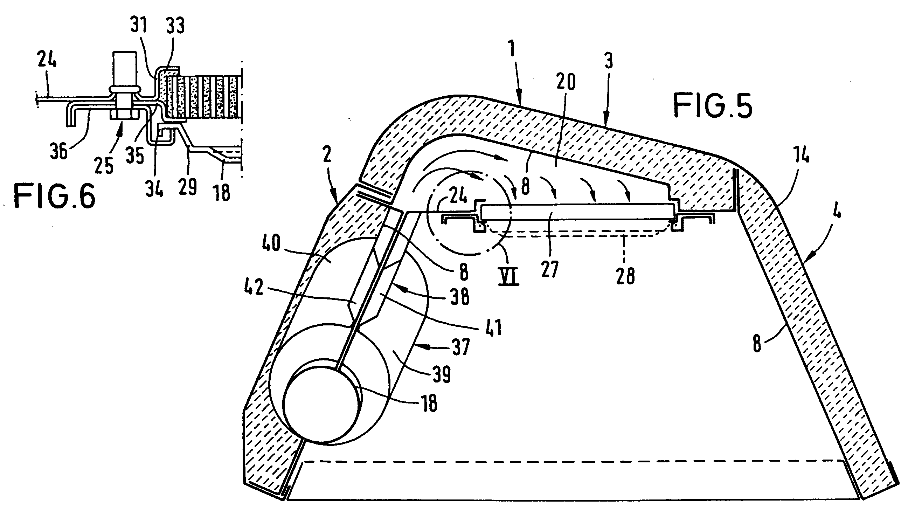

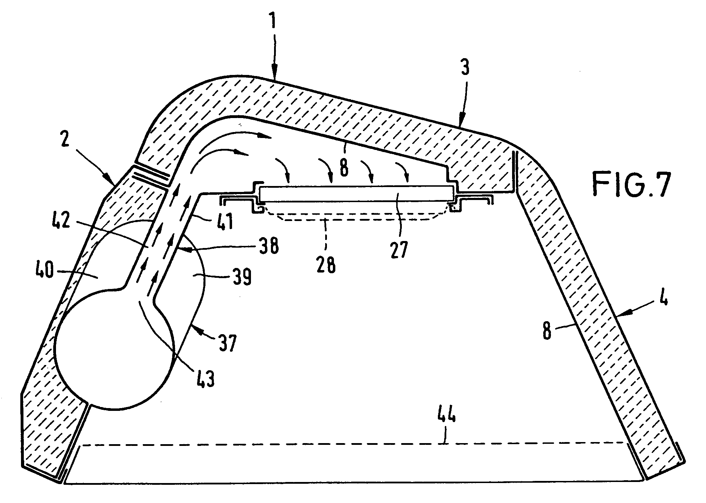

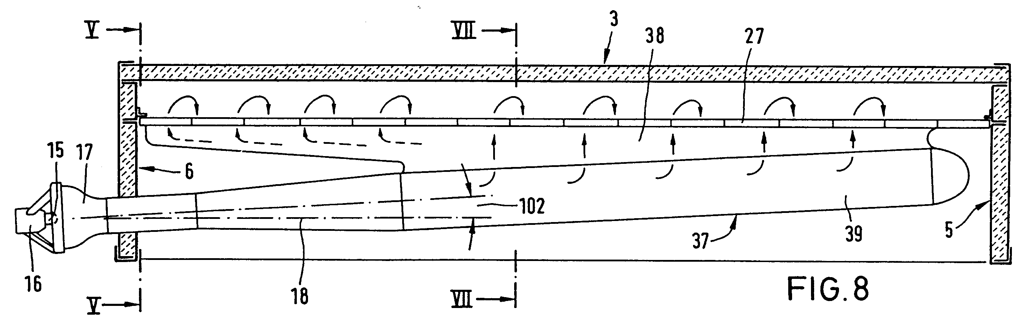

Die Figuren 5 bis 8 veranschaulichen ein anderes Ausführungsbeispiel des erfindungsgemäßen Strahlungsbrenners. Bei dieser Ausführung sind das Mischrohr 18 und die Zwischenkammer 37 von dem einen Ende aus, an dem sich die Injektordüse 15 befindet, unter einem spitzen Winkel 102 ansteigend in dem Gehäuse 1 angeordnet. Auf diese Weise wird eine verstärkte Auftriebswirkung des vorerwärmten Brennstoff-Luft-Gemisches erzielt. Zur Konstruktionsvereinfachung weist die Zwischenkammer 37 einen zylindrischen Hohlkörper mit einem Längsschlitz 43 auf. An den Längsschlitz 43 ist ein Schacht 38 angeschlossen, welcher in die Gemischkammer 20 mündet. Zur weiteren Konstruktionsvereinfachung bestehen die Zwischenkammer 37 und der Schacht 38 aus zwei im wesentlichen symmetrischen Schalen 39, 40 bzw. 41, 42. Das Mischrohr 18 ist vorteilhafterweise als Venturirohr ausgebildet.

Figur 6 zeigt eine etwas andere Gestaltung der gemeinsamen Nietverbindung 25 verglichen mit Figur 2. Hier ist eine weitere gekantete Blecheinfassung 35 sowie eine angepaßt gekantete Halteleiste 35 vorgesehen. In ein U-förmig gekantetes Teil der Halteleiste 36 greift die Randkante 34 des Gitterrandes 29 ein.

Zur weiteren Konstruktionsvereinfachung kann die äußere Zylinderschale 40 der Zwischenkammer 37 aus einem entsprechenden einwärts gewölbten Teil der Innenwand 8 des doppelwandigen Gehäuses 1 gebildet sein.

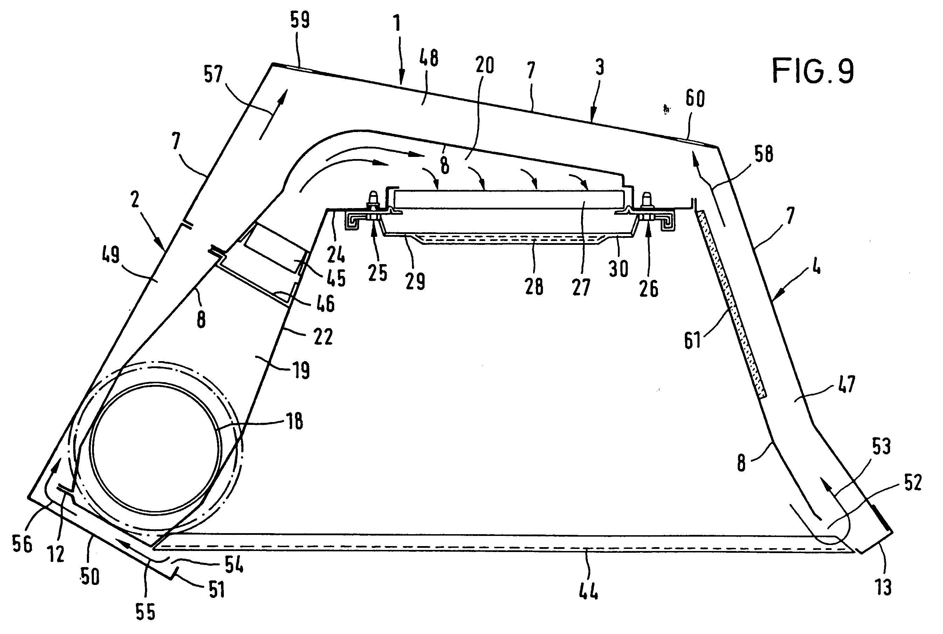

Figur 9 veranschaulicht ein weiteres besonders bevorzugtes Ausführungsbeispiel des erfindungsgemäßen Strahlungsbrenners. Hierbei sind die beiden Wände 7 und 8 des Gehäuses 1 derart mit Abstand voneinander angeordnet, daß ein freier Zwischenraum 47, 48 und 49 gebildet wird. Die äußere Wand 7 des Gehäuses 1 ist einseitig über den linken unteren Rand 12 der offenen Gehäuseseite hinaus verlängert. Das Verlängerungsteil 50, 51 ist mit Abstand von dem Rand 12 nach innen umgekantet, und zwar derart, daß die heißen Abgase, die vorher die Innenwandung 22 der Zwischenkammer 19 bestrichen haben, in den Zwischenraum 49 geleitet werden und sodann zusätzlich auch die Außenwand der Zwischenkammer 19 bestreichen. Die heißen Abgase treten somit durch den Durchtrittsschlitz 54 hindurch und strömen in Richtung der Pfeile 55, 56 und 57 aufwärts. Vor den gegenüberliegenden Rand 13 ist ein weiterer Längsschlitz 52 oder eine Reihe von Öffnungen vorgesehen, durch welche ein weiterer Teil der heißen Abgase in Richtung der Pfeile 53 und 58 abströmen kann. Im mittleren Bereich der Gehäuseaußenwand 7 sind Abströmöffnungen 59 und 60 für die heißen Abgase vorgesehen. Wenn eine weitgehendere Vorerwärmung des frischen Brennstoff-Luft-Gemisches auch in der Gemischkammer 20 gewünscht wird, können die Abströmöffnungen 59 und ggf. auch 60 weiter nach innen zu angeordnet sein. Die Abströmöffnungen 59 und 60 können als Löcher oder Längsschlitze ausgebildet sein. Um ein eventuell zu starkes Aufheizen der Innenwandung 8 des rechten Gehäusewandungsteils 4 zu vermeiden, kann in dem Zwischenraum 47, der der Zwischenkammer 19 gegenüberliegt, auf der Außenseite der inneren Gehäusewandung 8 eine Platte 61 aus wärmeisolierendem Material, vorzugsweise aus dichter Mineralwolle, befestigt sein.

Besonders bei sehr langgestreckten Strahlungsbrennern kann es von Vorteil sein, daß in der Zwischenkammer 19 Verteilerleitbleche 45 und 46 für das Brennstoff-Luft-Gemisch vorgesehen sind.

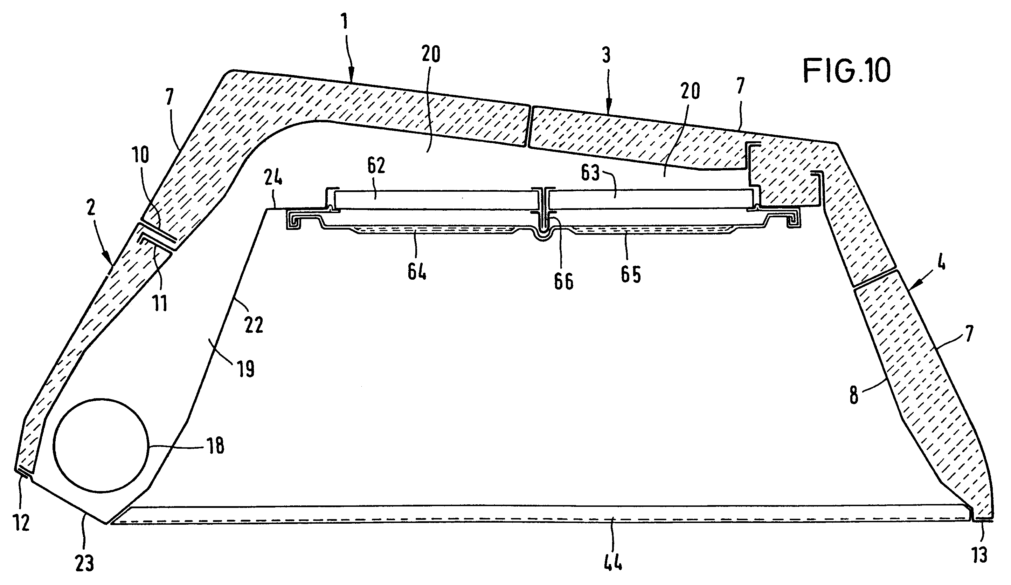

Figur 10 zeigt ein weiteres Ausführungsbeispiel eines Strahlungsbrenners, der auf der Konstruktion gemäß den Figuren 1 und 4 beruht, der aber eine vergleichbar größere Heizleistung dadurch bietet, daß zwei Brenner-Keramikplatten-Einheiten 62 und 63 in einer Ebene nebeneinander in einem entsprechend verbreiterten Gehäuse 1 angeordnet sind. Jede dieser Einheiten kann, wie oben beschrieben wurde, wiederum aus einer Mehrzahl von dicht hintereinander liegenden einzelnen Brenner-Keramikplatten gebildet sein. Entsprechend den beiden Brenner-Keramikplatten-Einheiten sind auch zwei für jede Einheit gemeinsame Strahlungsgitter 64 und 65 vorgesehen. Zwischen den beiden Brenner-Keramikplatten-Einheiten 62, 63 und den Strahlungsgittern 64, 65 ist eine gemeinsame Zwischenhalterung 66 vorhanden. Beide Brenner-Keramikplatten-Einheiten werden von einer gemeinsamen Gemischkammer 20 aus beaufschlagt.

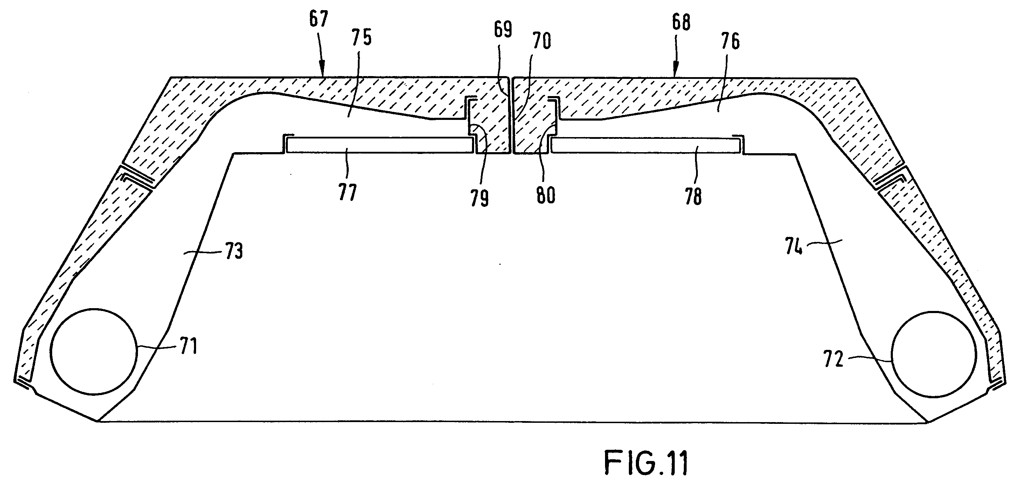

Figur 11 zeigt vereinfacht ein weiteres Ausführungsbeispiel eines Strahlungsbrenners, der aus zwei symmetrisch zueinander angeordneten und gleichgestalteten Gehäuseteilen 67 und 68 zusammengesetzt ist. Hierdurch werden für einen großen, leistungsfähigen Strahlungsbrenner die Herstellungskosten gering gehalten. Vereinfacht gezeichnet sind die beiden Gehäuseteile 67, 68 mit Hilfe von Verbindungsblechen 69 und 70 miteinander verbunden. Es sind hier wieder zwei Brenner-Keramikplatten-Einheiten 77 und 78 in einer Ebene nebeneinander in dem entsprechend verbreiterten Gesamtgehäuse mit den Gehäuseteilen 67 und 68 angeordnet. Jede Einheit ist aber hier von einer eigenen Gemischkammer 75 bzw. 76 beaufschlagt. Jede Einheit besitzt auch ein eigenes Mischrohr 71 bzw. 72 und eine eigene Zwischenkammer 73 bzw. 74 und demgemäß eigene Vorrichtungen zum Zuführen von Brennstoff und Luft. Ferner sind zwei Zwischenhalterungen 79 und 80 vorhanden.

Je nach den konstruktiven Gegebenheiten kann die Zwischenkammer auch eine andere räumliche Gestalt aufweisen, und sie kann einfach auf der Innenwandung des Gehäuses 1 befestigt werden.

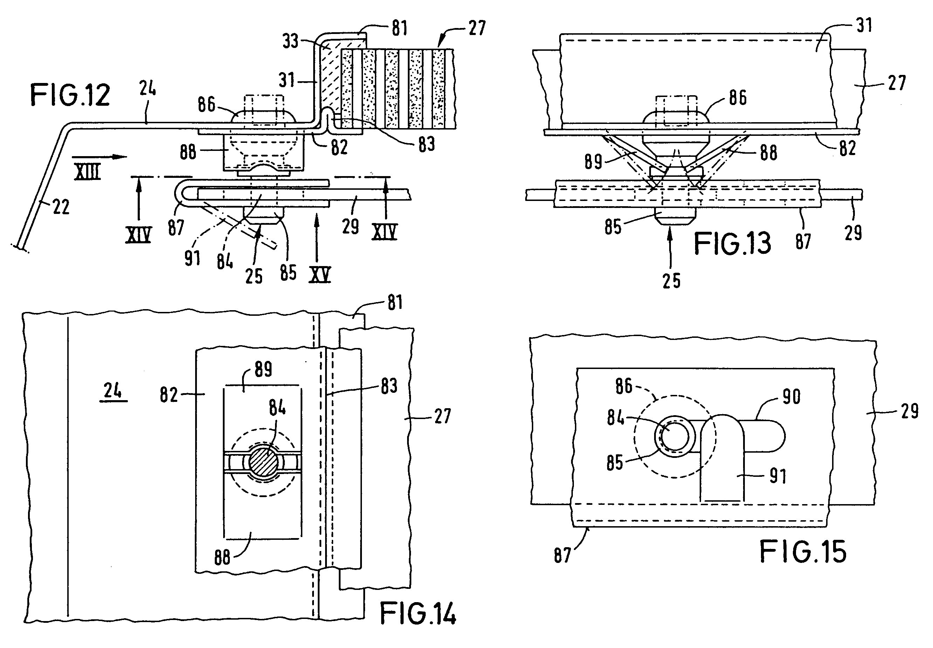

Wie bereits oben beschrieben worden ist, erfolgt die Befestigung der Brenner-Keramikplatten und der Strahlungsgitter mittels einer Reihe gemeinsamer Nietverbindungen 25 bzw. 26, die über die Länge des Strahlungsbrenners verteilt sind. Wegen der unterschiedlichen Materialausdehnungen beim Betrieb des Strahlungsbrenners sollten einerseits gewisse Bewegungsspiele in den Nietverbindungen möglich sein, andererseits muß aber gewährleistet sein, daß die Ränder der Brenner-Keramikplatten gasdicht eingefaßt bleiben. In den nachfolgend beschriebenen Figuren 12 bis 22 sind bevorzugte Konstruktionen von Nietverbindungen dargestellt.

Bei dem Ausführungsbeispiel nach den Figuren 12 bis 15 greift die Blecheinfassung 31 am Rand 24 der Innenwandung 22 mit einem umgebogenen leistenförmigen Teil 81 um die L-förmige Dichtung 33. Von unten wird ein Zwischenblech 82 mit einer Falzung 83 gegen die Dichtung 33 gedrückt. Gleichzeitig wird durch das innere leistenförmige Teil des Zwischenbleches der Rand der Brenner-Keramikplatte 27 auf der Unterseite gehalten. Die Befestigung des Gitterrandes 29 mittels des Nietbolzens 84 erfolgt unter Zwischenschaltung einer U-förmigen Halteleiste 87. Es sind entsprechende Bohrungen bzw. Langlöcher 90 für den Durchtritt des Nietbolzens 84 vorhanden. Der untere Schenkel der Halteleiste 87 liegt auf dem Nietkopf 85 auf. Der andere verformte Nietkopf 86 drückt auf das Blechteil 24. Um eine Montagevereinfachung und eine gewisse Beweglichkeit bei der Befestigung des Gitterrandes 29 zu erhalten, sind Blechteile 88 und 89 aus dem Zwischenblech 82 ausgeklinkt und nach unten in Schrägstellung gemäß Figur 13 gebogen. Aus dem unteren Schenkel der Halteleiste 87 ist ein weiteres Blechteil 91 ausgeklinkt, das als Verschiebesicherung dienen kann.

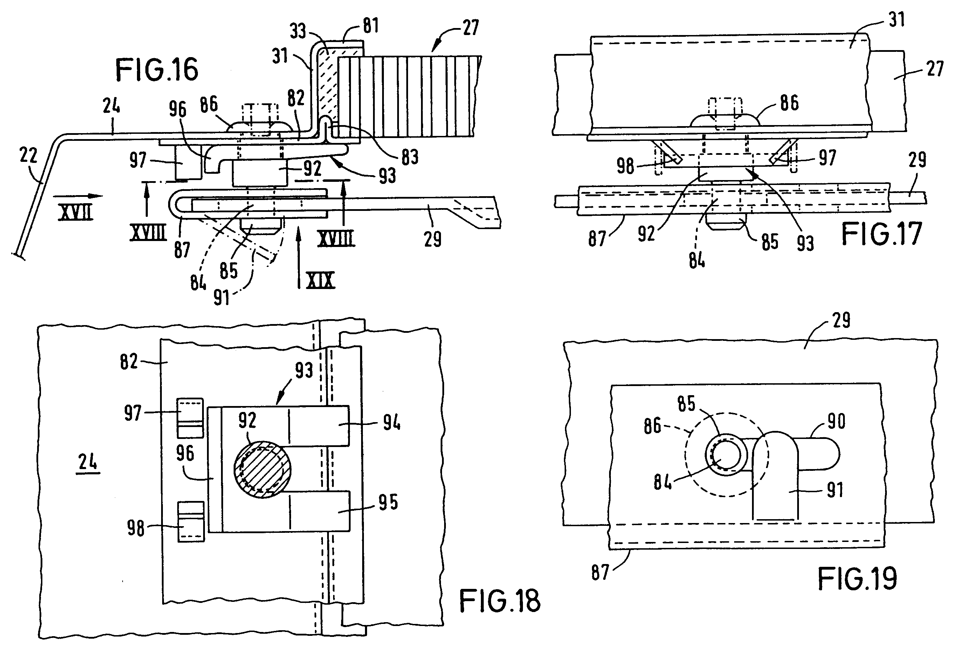

Bei dem Ausführungsbeispiel nach den Figuren 16 bis 19 sind für die mit dem vorhergehenden Ausführungsbeispiel übereinstimmenden Teile die gleichen Bezugszeichen verwendet worden. Bei diesem Ausführungsbeispiel besitzt die Nietverbindung einen U-förmigen Keil 93, dessen beiderseitige Schenkel 94 und 95 über eine zylindrische Verstärkung 92 des Nietbolzens greifen. Bei diesem Ausführungsbeispiel sind zur Verschiebesicherung des Keiles aus dem Zwischenblech 82 zwei Blechteile 97 und 98 ausgeklinkt, gegen die sich der Steg 96 des Keiles 93 anlegen aber nicht weiter verschieben kann.

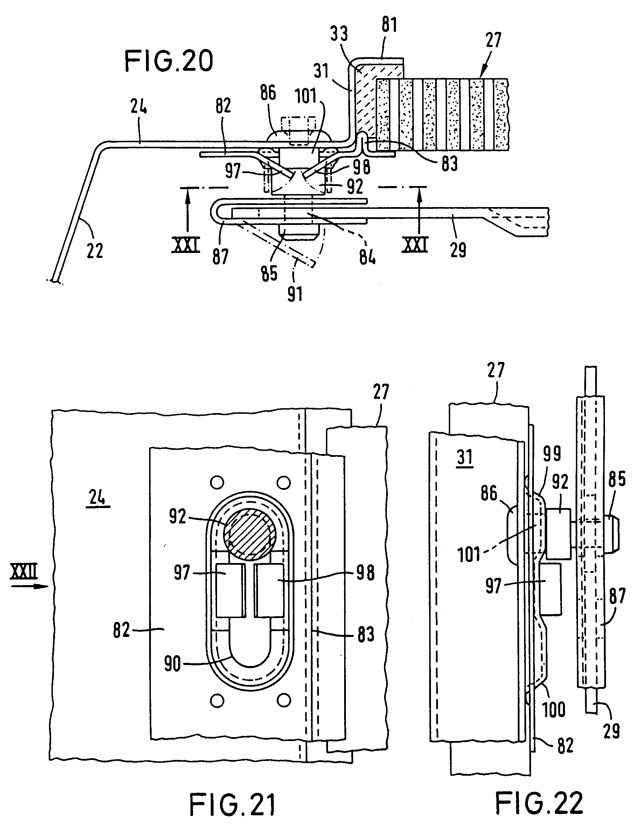

Eine ähnliche Befestigungsart der Nietverbindung zeigen die Figuren 20 bis 22. Es sind hier wieder Langlöcher und ausgeklinkte Blechteile 97 und 98 vorgesehen, so daß der Nietbolzen 101 nach Figur 21 wahlweise in die obere oder in eine untere Position verschoben und dann durch die Blechteile 97, 98 gegen größeres Verschieben gesichert ist. Es sind hier Auswölbungen 99 und 100 vorgesehen, die an einer zylindrischen Verstärkung 92 des Bolzens anliegen und eine gewisse Federwirkung und damit Nachgiebigkeit erzeugen.

## Patentansprüche

1. Strahlungsbrenner, insbesondere für gasförmigen Brennstoff, mit einem im Querschnitt etwa trapezförmigen einseitig offenen doppelwandigen Gehäuse (1) mit Reflektorinnenwänden (8), in dem sich eine Gemischkammer (20) zur Aufbereitung des Brennstoff-Luft-Gemisches befindet, wobei an die Gemischkammer (20) eine zahlreiche Verbrennungskanäle aufweisende Brenner-Keramik-Platte (27) angeschlossen ist, wobei ferner auf der Abstrahlungsseite der Brenner-Keramikplatte (27) ein Strahlungsgitter (28) vorgesetzt ist, und wobei eine Vorrichtung zum Zuführen von Brennstoff und Luft zu der Gemischkammer (20) vorgesehen ist, welche eine an eine Brennstoffleitung (16) angeschlossene Injektordüse (15) sowie ein Mischrohr (18) aufweist, dadurch gekennzeichnet, daß die Injektordüse (15) und das Mischrohr (18) nach dem Rand (12) der offenen Gehäuseseite zu angeordnet sind, und daß zwischen dem Mischrohr (18) und der Gemischkammer (20) eine Zwischenkammer (19) vorgesehen ist, derart, daß die heißen Abgase die Wandung (22) der Zwischenkammer (19) bestreichen und das in der Zwischenkammer (19) befindliche frische Brennstoff-Luft-Gemisch vorgewärmt wird.

2. Strahlungsbrenner nach Anspruch 1, dadurch gekennzeichnet, daß das Gehäuse (1) eine im Verhältnis zu den Querschnittsabmessungen langgestreckte Form aufweist und daß das Mischrohr (18) nahe einem Längsrand (12) der offenen Gehäuseseite angeordnet ist.

3. Strahlungsbrenner nach Anspruch 1 oder 2, dadurch gekennzeichnet, daß das Mischrohr (18) über einen Teil der Länge der Zwischenkammer (19) in diese hineinragt, und daß die Zwischenkammer (19) sich über die Länge des Gehäuses (1) erstreckt und bis zum längsseitigen Anschluß (21) an die Gemischkammer (20) im Querschnitt trapezförmig verjüngt.

4. Strahlungsbrenner nach Anspruch 1, dadurch gekennzeichnet, daß das Mischrohr (18) und die Zwischenkammer (19) von dem einen Ende aus, an dem sich die Injektordüse (15) befindet, unter einem spitzen Winkel (102) ansteigend in dem Gehäuse (1) angeordnet sind.

5. Strahlungsbrenner nach Anspruch 4, dadurch gekennzeichnet, daß die Zwischenkammer (37) einen zylindrischen Hohlkörper mit einem Längsschlitz (43) aufweist, und daß an den Längsschlitz (43) ein Schacht (38) angeschlossen ist, welcher in die Gemischkammer (20) mündet.

6. Strahlungsbrenner nach Anspruch 5, dadurch gekennzeichnet, daß die Zwischenkammer (37) und der Schacht (38) aus zwei im wesentlichen symmetrischen Schalen (39, 40; 41, 42) bestehen.

7. Strahlungsbrenner nach einem der vorhergehenden Ansprüche, dadurch gekennzeichnet, daß das Mischrohr (18) als Venturirohr ausgebildet ist.

8. Strahlungsbrenner nach einem der vorhergehenden Ansprüche, dadurch gekennzeichnet, daß ein Teil (40) der Wandung der Zwischenkammer (37) aus einem entsprechenden einwärts gewölbten Teil der Innenwand (8) des doppelwandigen Gehäuses (1) gebildet ist.

9. Strahlungsbrenner nach einem der vorhergehenden Ansprüche, dadurch gekennzeichnet, daß die Gemischkammer (20) ausgehend von der Anschlußstelle (21) mit der Zwischenkammer (19) über ihre Breite im Querschnitt trapezförmig verjüngt ist.

10. Strahlungsbrenner nach einem der vorhergehenden Ansprüche, dadurch gekennzeichnet, daß zwei Brenner-Keramik-Platten-Einheiten (62, 63) in einer Ebene nebeneinander in einem entsprechend verbreiterten Gehäuse (1) angeordnet sind und von einer gemeinsamen Gemischkammer (20) aus beaufschlagt sind.

11. Strahlungsbrenner nach einem der Ansprüche 1 bis 9, dadurch gekennzeichnet, daß zwei Brenner-Keramik-Platten-Einheiten (77, 78) in einer Ebene nebeneinander in einem entsprechend verbreiterten Gehäuse (67, 68) angeordnet sind, welche in symmetrischer Anordnung von je einer eigenen Gemischkammer (75, 76) und angeschlossenen Vorrichtungen (71, 72, 73, 74) zum Zuführen von Brennstoff und Luft beaufschlagt sind.

12. Strahlungsbrenner nach einem der vorhergehenden Ansprüche, dadurch gekennzeichnet, daß die beiden Wände (7, 8) des Gehäuses (1) mit Abstand voneinander angeordnet sind, und daß der Zwischenraum zwischen den beiden Wänden mit einem Wärmeisolationsmaterial (14), vorzugsweise Mineralwolle, ausgefüllt sind.

13. Strahlungsbrenner nach einem der Ansprüche 1 bis 11, dadurch gekennzeichnet, daß die beiden Wände (7, 8) des Gehäuses (1) mit Abstand voneinander angeordnet sind, so daß ein freier Zwischenraum (47, 48, 49) gebildet ist, daß die äußere Wand (7) des Gehäuses (1) über den Rand (12) der offenen Gehäuseseite hinaus verlängert und das Verlängerungsteil (50, 51) mit Abstand von dem Rand (12) nach innen umgekantet ist, derart, daß die heißen Abgase in den Zwischenraum (49) geleitet werden und zusätzlich die Außenwand der Zwischenkammer (19) bestreichen, und daß im mittleren Bereich der Gehäuseaußenwand Abströmöffnungen (59, 60) für die Abgase vorgesehen sind.

14. Strahlungsbrenner nach Anspruch 13, dadurch gekennzeichnet, daß in dem der Zwischenkammer (19) gegenüberliegenden Zwischenraum (47) auf der Außenseite der inneren Gehäusewandung (8) eine Platte (61) aus wärmeisolierendem Material, vorzugsweise Mineralwolle, befestigt ist.

15. Strahlungsbrenner nach Anspruch 1, dadurch gekennzeichnet, daß die Zwischenkammer (19; 37) auf der Innenwandung (8) des Gehäuses (1) befestigt ist.

16. Strahlungsbrenner nach Anspruch 3, dadurch gekennzeichnet, daß in der Zwischenkammer (19) Verteilerleitbleche (45, 46) für das Brennstoff-Luft-Gemisch vorgesehen sind.

17. Strahlungsbrenner nach einem der vorhergehenden Ansprüche, dadurch gekennzeichnet, daß der innere Rand (24) der Zwischenkammerwandung (22) im Bereich der Anschlußstelle (21) mit der Gemischkammer (20) nach innen umgekantet ist, daß an diesem Rand die einen Längsränder der Brenner-Keramikplatten (27) und des Strahlungsgitters (28) und deren anderen Längsränder mit einem entsprechend gekanteten Teil (103) der Gehäuseinnenwandung (8) durch jeweils gemeinsame Nietenverbindungen (25, 26) befestigt sind.

## Claims

1. Radiant burner, in particular for gaseous fuel, with a double-walled housing (1) of approximately trapezoidal cross-section and which is open on one side, with reflector inner walls (8), in which a mixing chamber (20) for the preparation of the fuel/air mixture is located, a burner ceramic plate (27) comprising numerous combustion channels being connected to the mixing chamber (20), a radiant grid (28) being furthermore fixed on the radiant side of the burner ceramic plate (27) and a device for supplying fuel and air to the mixing chamber (20) being provided, which comprises an injector nozzle (15) connected to a fuel line (16) as well as a mixing tube (18), characterised in that the injector nozzle (15) and the mixing tube (18) are located towards the edge (12) of the open housing side, and that provided between the mixing tube (18) and the mixing chamber (20) is an intermediate chamber (19) so that the hot exhaust gases sweep over the wall (22) of the intermediate chamber (19) and the fresh fuel/air mixture located in the intermediate chamber (19) is pre-heated.

2. Radiant burner according to Claim 1, characterised in that the housing (1) has an elongated shape in proportion to the cross-sectional dimensions and that the mixing tube (18) is located close to one longitudinal edge (12) of the open housing side.

3. Radiant burner according to Claim 1 or 2, characterised in that over part of the length of the intermediate chamber (19), the mixing tube (18) projects into the latter and that the intermediate chamber (19) extends over the length of the housing (1) and tapers with a trapezoidal cross-section as far as the longitudinal connection (21) to the mixing chamber (20).

4. Radiant burner according to Claim 1, characterised in that the mixing tube (18) and the intermediate chamber (19) are arranged to ascend at an acute angle (102) in the housing (1), from one end, at which the injector nozzle (15) is located.

5. Radiant burner according to Claim 4, characterised in that the intermediate chamber (37) has a cylindrical hollow body with a longitudinal slot (43), and that connected to the longitudinal slot (43) is a shaft (38), which opens into the mixing chamber (20).

6. Radiant burner according to Claim 5, characterised in that the intermediate chamber (37) and the shaft (38) consist of two substantially symmetrical shells (39, 40; 41, 42).

7. Radiant burner according to one of the preceding Claims, characterised in that the mixing tube (18) is constructed as a venturi tube.

8. Radiant burner according to one of the preceding Claims, characterised in that a part (40) of the wall of the intermediate chamber (37) is formed from a corresponding inwardly curved part of the inner wall (8) of the double-walled housing (1).

9. Radiant burner according to one of the preceding Claims, characterised in that starting from the connecting point (21) to the intermediate chamber (19), the mixing chamber (20) tapers over its width with a trapezoidal cross-section.

10. Radiant burner according to one of the preceding Claims, characterised in that two burner ceramic plate units (62, 63) are arranged in one plane one beside the other in a correspondingly enlarged housing (1) and are acted upon by a common mixing chamber (20).

11. Radiant burner according to one of Claims 1 to 9, characterised in that two burner ceramic plate units (77, 78) are arranged in one plane one beside the other in a correspondingly enlarged housing (67, 68), which in a symmetrical arrangement are acted upon by respectively their own mixing chamber (75, 76) and connected devices (71, 72, 73, 74) for supplying fuel and air.

12. Radiant burner according to one of the preceding Claims, characterised in that the two walls (7, 8) of the housing (1) are arranged at a distance apart and that the gap between the two walls is filled with a thermal insulation material (14), preferably mineral wool.

13. Radiant burner according to one of Claims 1 to 11, characterised in that the two walls (7, 8) of the housing (1) are arranged at a distance apart, so that a free gap (47, 48, 49) is formed, that the outer wall (7) of the housing (1) is extended beyond the edge (12) of the open housing side and the extension part (50, 51) is bent inwards at a distance from the edge (12) so that the hot exhaust gases are guided into the gap (49) and in addition sweep over the outer wall of the intermediate chamber (19), and that provided in the central region of the housing outer wall are discharge openings (59, 60) for the exhaust gases.

14. Radiant burner according to Claim 13, characterised in that a plate (61) of thermally insulating material, preferably mineral wool, is attached in the gap (47) located opposite the intermediate chamber (19), to the outer side of the inner housing wall (8).

15. Radiant burner according to Claim 1, characterised in that the intermediate chamber (19; 37) is attached to the inner wall (8) of the housing (1).

16. Radiant burner according to Claim 3, characterised in that provided in the intermediate chamber (19) are distribution guide plates (45, 46) for the fuel/air mixture.

17. Radiant burner according to one of the preceding Claims, characterised in that the inner edge (24) of the intermediate chamber wall (22) is bent inwards in the region of the connection point (21) to the mixing chamber (20), that fastened by respectively common rivet connections (25, 26) to this edge are one longitudinal edge of the burner ceramic plate (27) and of the radiation grid (28) and their other longitudinal edges are fastened to a correspondingly bent part (103) of the housing inner wall (8).

## Revendications

1. Brûleur radiant, notamment pour un combustible gazeux, possédant un boîtier à paroi double (1) ouvert unilatéralement, possédant une section transversale approximativement trapézoïdale et comportant des parois intérieures réfléchissantes (8) et dans lequel est disposée une chambre de mélange (20) servant à préparer le mélange combustible-air, et dans lequel une plaque en céramique (27) du brûleur, qui possède une multiplicité de canaux de combustion, est raccordée à la chambre de mélange (20), et dans lequel en outre une grille rayonnante (28) est disposée en avant sur le côté de rayonnement de la plaque céramique (27) du brûleur, et dans lequel il est prévu un dispositif pour envoyer le combustible et l'air à la chambre de mélange (20) et qui possède une buse d'injection (15) raccordée à une conduite (16) d'amenée du combustible, ainsi qu'un tube de mélange (18), caractérisé en ce que la buse d'injection (15) et le tube de mélange (18) sont disposés en direction du bord (12) du côté ouvert du boîtier, et qu'une chambre intermédiaire (19) est disposée entre le tube de mélange (18) et la chambre de mélange (20) de sorte que les gaz d'échappement chauds balayent la paroi (22) de la chambre intermédiaire (19) et que le mélange frais combustible-air, qui est situé dans la chambre intermédiaire (19), est préchauffé.

2. Brûleur radiant selon la revendication 1, caractérisé en ce que le boîtier (1) possède une forme allongée en rapport avec les dimensions de sa section transversale et que le tube de mélange (18) est disposé à proximité d'un bord longitudinal (12) du côté ouvert du boîtier.

3. Brûleur radiant selon la revendication 1 ou 2, caractérisé en ce que le tube de mélange (18) pénètre dans la chambre intermédiaire (19) sur une partie de la longueur de cette chambre et que la chambre intermédiaire (19) s'étend sur la longueur du boîtier (1) et que sa section transversale se rétrécit selon une forme trapézoïdale jusqu'au raccord (21) de liaison avec la chambre de mélange (20) au niveau du côté longitudinal.

4. Brûleur radiant selon la revendication 1, caractérisé en ce que le tube de mélange (18) et la chambre intermédiaire (19) sont disposés de telle sorte qu'ils remontent dans le boîtier (1) en faisant un angle aigu (102), à partir d'une extrémité au niveau de laquelle est située la buse d'injection (15).

5. Brûleur radiant selon la revendication 4, caractérisé en ce que la chambre intermédiaire (37) possède un corps cylindrique creux pourvu d'une fente longitudinale (43), et qu'à la fente longitudinale (43) est raccordé un puits (38), dans lequel débouche la chambre de mélange (20).

6. Brûleur radiant selon la revendication 5, caractérisé en ce que la chambre intermédiaire (37) et le puits (38) sont constitués par deux coques essentiellement symétriques (39, 40; 41, 42).

7. Brûleur radiant selon l'une des revendications précédentes, caractérisé en ce que le tube de mélange (18) est réalisé sous la forme d'un tube à venturi.

8. Brûleur radiant selon l'une des revendications précédentes, caractérisé en ce qu'une partie (40) de la paroi de la chambre intermédiaire (37) est formée par une partie correspondante, cintrée vers l'intérieur, de la paroi intérieure (8) du boîtier à paroi double (1).

9. Brûleur radiant selon l'une des revendications précédentes, caractérisé en ce que la chambre de mélange (20) se rétrécit, dans le sens de sa largeur, avec une section transversale de forme trapézoïdale, à partir du point (21) de raccordement avec la chambre intermédiaire (19).

10. Brûleur radiant selon l'une des revendications précédentes, caractérisé en ce que deux unités de plaque en céramique (62, 63) du brûleur sont disposées côte-à-côte dans un plan, dans un boîtier (1) élargi de façon correspondante et sont chargées à partir d'une chambre de mélange commune (20).

11. Brûleur radiant selon l'une des revendications 1 à 9, caractérisé en ce que deux unités de plaques céramiques (77, 78) du brûleur sont disposées côte-à-côte dans un plan, dans un boîtier élargi de façon correspondante (67, 68), ces unités étant chargées, selon une disposition symétrique, par des chambres respectives particulières de mélange (75, 76) et des dispositifs raccordés (71, 72, 73, 74) pour l'envoi du combustible et de l'air.

12. Brûleur radiant selon l'une des revendications précédentes, caractérisé en ce que les deux parois (7,8) du boîtier (1) sont situées à distance l'une de l'autre et que l'espace intercalaire entre les deux parois est rempli par un matériau d'isolation thermique (14), de préférence de la laine minérale.

13. Brûleur radiant selon l'une des revendications 1 à 11, caractérisé en ce que les deux parois (7,8) du boîtier (1) sont disposées à distance l'une de l'autre de manière à délimiter une chambre intermédiaire libre (47, 48, 49), que la paroi extérieure (7) du boîtier (1) se prolonge au-delà du bord (12) du côté ouvert du boîtier et que la partie de prolongement (50, 51) est repliée vers l'intérieur à distance du bord (12) de telle sorte que les gaz d'échappement chauds sont introduits dans la chambre intermédiaire (49) et balayent en supplément la paroi extérieure de la chambre intermédiaire (19), et que des ouvertures d'évacuation (59, 60) pour les gaz d'échappement sont prévues dans la partie médiane de la paroi extérieure du boîtier.

14. Brûleur radiant selon la revendication 13, caractérisé en ce qu'une plaque (61) formée d'un matériau d'isolation thermique, de préférence de la laine minérale, est fixée dans la chambre intermédiaire (47) située à l'opposé de la chambre intermédiaire (19), sur la face extérieure de la paroi intérieure (8) du boîtier.

15. Brûleur radiant selon la revendication 1, caractérisé en ce que la chambre intermédiaire (19; 37) est fixée à la paroi intérieure (8) du boîtier (1).

16. Brûleur radiant selon la revendication 2, caratérisé en ce que des chicanes de distribution (45, 46) pour le mélange combustible-air sont prévues dans la chambre intermédiaire (19).

17. Brûleur radiant selon l'une des revendications précédentes, caractérisé en ce que le bord intérieur (24) de la paroi (22) de la chambre intermédiaire est replié vers l'intérieur dans la zone du point (21) de raccordement à la chambre de mélange (20), et qu'au niveau de ce bord, des premiers bords des plaques céramiques (26) du brûleur et de la grille rayonnante (28) et leurs autres bords longitudinaux sont fixés à une partie (103) repliée de façon correspondante de la paroi intérieure (8) du boîtier, au moyen de systèmes de liaison respectivement communs à rivets (25, 26).
